# EUROPÄISCHE PATENTSCHRIFT

(11) **EP 0 996 086 B1**
(45) Veröffentlichungstag und Bekanntmachung des Hinweises auf die Patenterteilung: **18.10.2006**
(21) Anmeldenummer: 99115251.3
(22) Anmeldetag: 02.08.1999
(51) Int. Cl.: G06K 19/077, H01F 41/10, H01F 41/06

(54) **Verfahren zum Herstellen einer Leiterschleife mit angeschlossenem Chipmodul zur Verwendung in kontaktlosen Chipkarten sowie Trägervorrichtung zur Verwendung in dem Verfahren**
Production method for a conductive loop connected to a chip module for application in contactless chip cards, as well as a supporting device to be used in the method
Procédé de fabrication d'une boucle conductrice connectée à un module comprenant une puce pour utilisation en tant que cartes à puce sans contact, ainsi qu'un dispositif de support à utiliser dans le procédé

(30) Priorität: 19.10.1998 DE 19848009
(43) Veröffentlichungstag der Anmeldung: 26.04.2000
(73) Patentinhaber: Gemplus GmbH, 70794 Filderstadt (DE)
(72) Erfinder: Schmidt, Frank, Dr., 99891 Fischbach (DE)
(74) Vertreter: Grünecker, Kinkeldey, Stockmair & Schwanhäusser Anwaltssozietät

(56) Entgegenhaltungen:
- WO-A-98/21730
- DE-A- 4 307 064
- DE-A- 4 408 124
- DE-A- 19 634 661
- DE-A- 19 710 656
- US-A- 4 785 527
- US-A- 5 115 560

## Beschreibung

Die vorliegende Erfindung betrifft ein Verfahren zum Herstellen einer Leiterschleife mit angeschlossenem Chipmodul zur Verwendung in kontaktlosen Chipkarten.

Kontaktlose Chipkarten verdrängen zunehmend die bisher üblichen kontaktbehafteten Chipkarten. Ein Problem bei der Herstellung kontaktloser Chipkarten besteht in dem Einbringen der Leiterschleife in den Kartenkörper. Üblicherweise werden Laminierverfahren eingesetzt, um die Leiterschleife sowie das mit der Leiterschleife verbundene Chipmodul etwa schichtmittig in den Kartenkörper einzubringen. Zum Einbringen der Leiterschleife mit angeschlossenem Chipmodul muss jedoch zunächst die Leiterschleife gewickelt werden und elektrisch mit dem Chipmodul verbunden werden. Dieser Vorgang erfordert eine hohe Präzision sowie einen vorsichtigen Umgang mit dem freiliegenden Chipmodul. Der Anmelderin sind bisher keine geeigneten Maschinen sowie Verfahren bekannt geworden, die eine Erstellung von den benötigten Leiterschleifen mit angeschlossenem Chipmodul in großer Stückzahl sowie hoher Qualität ermöglichen.

Es ist die Aufgabe der vorliegenden Erfindung, ein Herstellungsverfahren für Leiterschleifen mit angeschlossenem Chip oder Chipmodul anzugeben, mit dem eine Massenfertigung kontaktloser Chipkarten mit geringen Fertigungskosten ermöglicht wird.

Diese Aufgabe wird durch den Gegenstand des Anspruchs 1 gelöst.

Bevorzugte Ausgestaltungen sind Gegenstand der Unteransprüche.

Aus DE 4 307 064 A ist ein Verfahren bekannt, das die Merkmale A, B, E, F, G, H, I und J von Patentanspruch 1 aufweist.

Im folgenden wird die vorliegende Erfindung anhand bevorzugter Ausführungsformen in Zusammenhang mit den beiliegenden Zeichnungen näher erläutert. Dabei zeigen die Zeichnungen im einzelnen:
Fig. 1 eine Draufsicht auf eine Ausführungsform der erfindungsgemäßen Trägervorrichtung,
Fig. 2 eine Draufsicht auf eine Ausführungsform der erfindungsgemäßen Trägervorrichtung mit eingesetztem Chipmodul und fertiggewickelter Leiterschleife,
Fig. 3 einen Querschnitt durch den oberen Teil, d.h. den Halteteil der bevorzugten Ausführungsform der Trägervorrichtung,
Fig. 4 einen Querschnitt durch die bevorzugte Ausführungsform der Trägervorrichtung mit unterem und oberem Teil, und
Fig. 5 eine schematische Illustration der einzelnen Bearbeitungsstationen einer bevorzugten Ausführungsform für eine Vorrichtung zur Durchführung des erfindungsgemäßen Verfahrens.

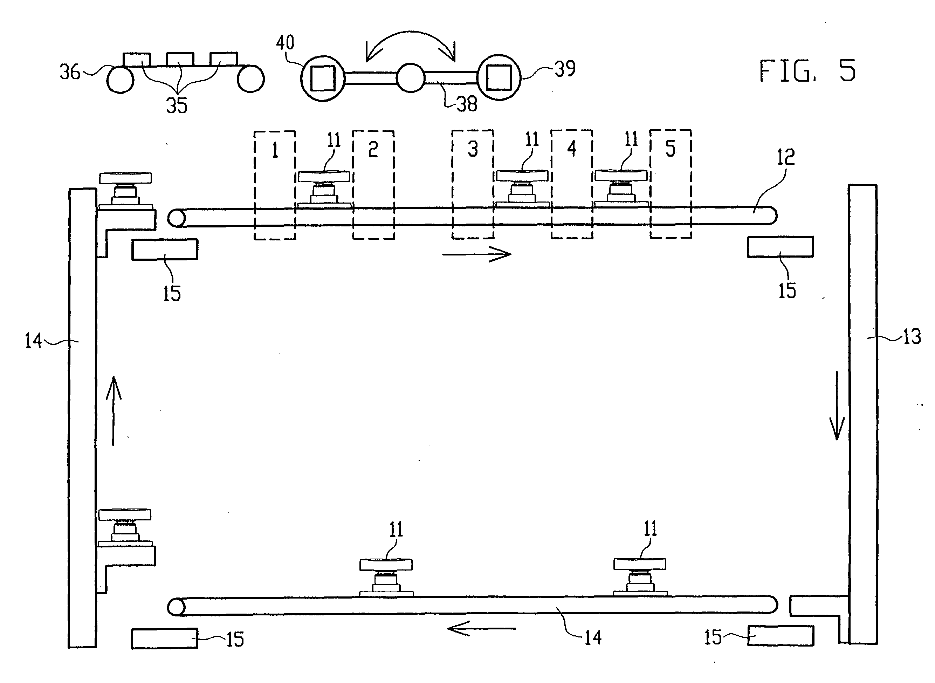

Fig. 5 zeigt eine schematische Illustration einer Ausführungsform für eine Vorrichtung zur Durchführung des erfindungsgemäßen Verfahrens. Die Vorrichtung 10 weist fünf Bearbeitungsstationen 1 bis 5 auf, an denen Trägervorrichtungen 11 sukzessive und in Pfeilrichtung vorbeigeführt werden. Die Trägervorrichtungen 11 werden mittels eines Förderbandes 12 von Station zu Station weiterbewegt und werden nach Erstellung des Chipmoduls mit angeschlossener Leiterschleife und Entnahme derselben von der Trägervorrichtung über einen Lift 13, ein Rückförderungsband 14 sowie einen weiteren Lift 14 wieder an den Anfang des Förderbandes 12 befördert, um für die Bearbeitung eines weiteren Moduls zur Verfügung zu stehen. Der Übergang von den Förderbändern zu den Liften wird vorzugsweise mittels Schiebeeinrichtungen 15 erreicht.

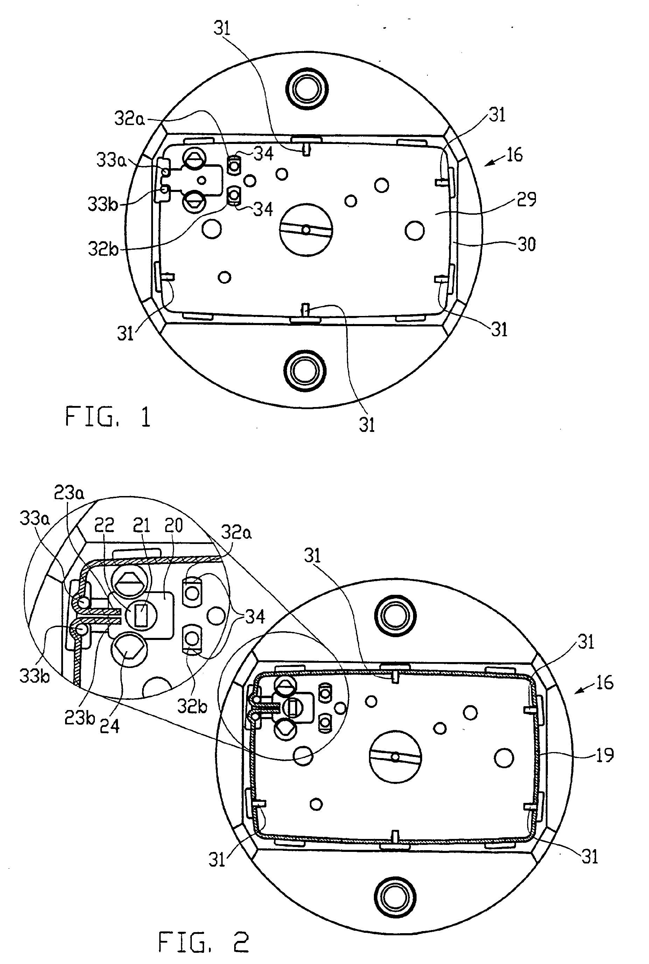

Für ein besseres Verständnis der in den Bearbeitungsstationen 1 bis 5 ablaufenden Vorgänge wird zunächst Bezug genommen auf die Fig. 1 bis 4, die eine bevorzugte Ausführungsform der erfindungsgemäßen Trägervorrichtung darstellen.

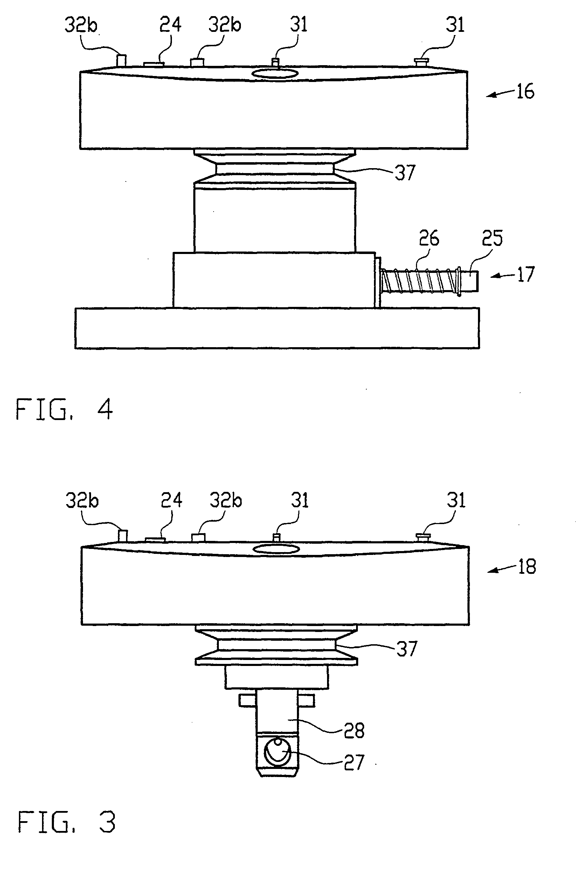

Fig. 4 zeigt einen Querschnitt durch die bevorzugte Ausführungsform für die Trägervorrichtung. Die Trägervorrichtung besteht aus zwei Teilen, einem Halteteil 16 und einem Sockelteil 17. Der obere Teil der Trägervorrichtung, d. h. der Halteteil, ist nochmals in Fig. 3 dargestellt und mit der Bezugsziffer 18 bezeichnet. Der Halteteil 18 kann während der Bearbeitung von Greifern aus dem Sockelteil herausgehoben und nahegelegenen Bearbeitungsstationen zugeführt werden. Der Sockelteil verbleibt während der Bearbeitung vorzugsweise auf dem Förderband und nimmt am Ende eines Bearbeitungsvorganges das Halteteil wieder auf, um mit diesem zusammen zur nächsten Bearbeitungsstation befördert zu werden.

Fig. 1 zeigt eine Draufsicht auf die bevorzugte Ausführungsform für das Halteteil 16. Die bevorzugte Ausführungsform für die Trägervorrichtung ist geeignet, um Leiterschleifen zu Verwendung in kontaktlosen Chipkarten herzustellen. Wie anhand der Fig. 2 ersichtlich ist, in der das Halteteil 16 mit fertiggewickelter Leiterschleife 19 gezeigt ist, wird auf der bevorzugten Ausführungsform eine Leiterschleifenform erzeugt, die ähnliche Abmessungen wie eine Normchipkarte aufweist, so dass die Leiterschleife nach Einbringung in den Kartenkörper nahe an den Rändern der Karte verläuft, um somit eine maximale Fläche einzuschließen.

Fig. 2 zeigt weiterhin ein in eine Mulde der Trägervorrichtung eingesetztes Chipmodul 20, aufweisend einen Chip 21, der von einer Schutzschicht 22 ummantelt wird sowie Kontaktflächen 23a und 23b. Die fertiggewickelte Leiterschleife 19 ist mit ihren zwei Enden an den Kontaktflächen 23a und 23b festgeschweißt. In diesem Zustand kann das Chipmodul mit befestigter Leiterschleife von der Trägervorrichtung entnommen werden.

Wie in Fig. 2 gezeigt, wird das Chipmodul 20 mittels einer Klemmvorrichtung 24, bestehend aus zwei sich seitlich an das Chipmodul herandrückenden Greifarmen gehalten. Die Greifarme 24 halten das Chipmodul mittels Federkraft, die von einer Feder im Inneren der Trägervorrichtung bewirkt wird. Zum Einsetzen und Herauslösen des Chipmoduls aus der Klemmvorrichtung 24 müssen die beiden Greifer nach außen bewegt werden, was dadurch bewirkt wird, dass eine vorzugsweise bolzenförmig ausgeführte Betätigungseinrichtung 25, wie sie in Fig. 4 gezeigt ist, gegen die Kraft einer Feder 26 in das Innere des Halteteils 17 der Trägervorrichtung gedrückt wird. Der so nach innen gedrückte Bolzen 25 greift dabei in eine Öffnung 27 einer dornförmigen Verlängerung 28 des Halteteils 18 ein, in deren Inneren ein vorzugsweise als Schubstange ausgebildetes Übertragungsglied vorhanden ist, das wiederum mit den Greifern der Klemmvorrichtung 24 in Wirkverbindung steht. Durch das Eindringen des Bolzens 25 in die Öffnung 26 wird der im Inneren des Doms 28 geführte Stab nach unten gezogen, was dazu führt, dass die Greifer der Klemmvorrichtung 24 nach außen bewegt werden und somit ein eingesetztes Chipmodul freigeben wird bzw. Raum geschaffen wird, um ein neues Chipmodul einzusetzen. Wird der Druck auf den Bolzen 25 entfernt, so schließen sich die Greifer erneut und halten ein eingesetztes neues Chipmodul.

Vorzugsweise ist eine Betätigung des Bolzens 25 in zwei Positionen möglich. In einer ersten Position wird das erwähnte Öffnen der Greifer der Klemmvorrichtung 24 bewirkt. Bei weiterem Eindringen des Bolzens 25 in das Sockelteil 17 wird ein Absenken eines inneren Teils 29 gegenüber einem äußeren Teil 30 des Halteteils 16 bewirkt. Diese Absenkung unterstützt die Entnahme einer fertiggewickelten Leiterschleife 19 von dem Halteteil.

Wie in den Fig. 1 bis 4 gezeigt, sind auf dem Halteteil Wickelstützen bzw. Vorsprünge 31 vorhanden, über die die Leiterschleife beim Aufwickeln gewickelt wird und somit die gewünschte Form erhält. Die Querschnitte gemäß den Fig. 3 und 4 zeigen außerdem erneut jeweils einen der Greifarme der Klemmvorrichtung 24.

Weiterhin sind in den Fig. 1 bis 4 Befestigungszapfen 32a sowie 32b gezeigt, die zum Befestigen des Leiterschleifendrahtes vor und nach dem Wickelvorgang dienen, Schließlich sind Umlenkzapfen 33a und 32b dargestellt, die ebenso wie die Wickelstützen 31 die Leiterschleife während des Wickelns spannen.

Die Befestigungszapfen 32a und 32b weisen jeweils eine scharfe Kante auf, die ein definiertes Abreißen des Leiterschleifendrahtes unter einer Zugbewegung erleichtern.

Die Wicklung der Leiterschleife erfolgt folgendermaßen.

Die Leiterschleife wird über ein nicht dargestelltes Werkzeug von einer Leiterschleifenvorratsspule zugeführt und an einem Steg der entsprechenden Bearbeitungsstation festgemacht. Anschließend wird der Draht zum Befestigungszapfen 32a geführt und dort festgelegt. Der Steg an der Bearbeitungsstation wird nun vom Befestigungszapfen der Trägervorrichtung wegbewegt, wodurch der Draht unter Zug gerät und an der Kante 34 des Befestigungszapfens 32a abreißt. Das freie Ende des Drahtes wird nun um den Umlenkzapfen 33a herumgeführt und von dort im Uhrzeigersinn entlang der Wickelstützen 31 verlegt. Entsprechend der späteren Verwendung des Chipmoduls mit befestigter Leiterschleife können eine oder mehrere, unter Umständen bis zu mehreren hundert Wicklungen durch Rotieren des Halteteils 16 in einer Wickelvorrichtung erreicht werden. Nachdem ein ausreichende Anzahl von Wicklungen um die Wickelstützen 31 gewickelt wurden, wird der Leiterschleifendraht über den Umlenkzapfen 32b in das Innere der Haltevorrichtung 16 zurückgeführt, dort an dem weiteren Befestigungszapfen 32b festgelegt und anschließend mit einem Befestigungssteg an der nicht gezeigten Wickelvorrichtung festgelegt. Durch erneutes Auseinanderführen der Trägervorrichtung und der Wickelvorrichtung gerät der Leiterschleifendraht erneut unter Spannung und reißt an der Kante 34 des Befestigungszapfens 32b.

Im Ergebnis ist nun eine Leiterschleife mit mehreren Wicklungen um die Wickelstützen 31 herum verlegt worden, und die freien Enden des Leiterschleifendrahtes führen zu den Belegungszapfen 32a, 32b. Durch die Ausrichtung von der Zapfen 32 und 33 verlaufen die beiden freien Drahtenden unmittelbar über den Kontaktflächen 23a und 23b des Chipmoduls und können mit diesen anschließend verschweißt werden. Ebenso können nach dem Verschweißen die freien Enden abgeschnitten werden und von einer Gebläsevorrichtung weggeblasen werden. Zum Wegblasen können die Befestigungszapfen 32a und 32b vorzugsweise in das Innere des Halteteils 16 entgegen einer Federkraft abgesenkt werden. Hierzu weisen die Befestigungszapfen 32a und 32b kleine Mulden auf, in die Stifte eingreifen, die die Befestigungszapfen nach unten drücken.

Im folgenden wird anhand der Fig. 5 ein Überblick über eine bevorzugte Ausführungsform des gesamten Verfahrens gegeben.

Das soeben beschriebene Aufwickeln des Leiterschleifendrahtes auf der Trägervorrichtung geschieht in der Bearbeitungsstation 2. Bevor dieser Vorgang ablaufen kann, muss an der Bearbeitungsstation 1 zunächst das Chipmodul in die Klemmvorrichtung 24 der Trägervorrichtung eingebracht werden. Hierzu entnimmt ein Greifer ein bereitgestelltes Chipmodul, vorzugsweise aus einem Band von aneinandergereihten Chipmodulen. Fig. 5 zeigt schematisiert Chipmodule 35, die über ein Band 36 aneinandergereiht sind bzw. durch Verbindung untereinander das Band 36 bilden. Ein zu verarbeitendes Chipmodul wird aus dem Band ausgestanzt und mittels eines Greifers an die auf dem Förderband ruhende Trägervorrichtung 11 herangeführt und in die Mulde im Halteteil 16 eingesetzt. Zum Einsetzen muss zeitgleich der Bolzen 25 in die erste Position eingedrückt werden, damit sich die Klemmvorrichtung 24 öffnet und das Einsetzen des Chipmoduls erfolgen kann.

Im Anschluss wird die Trägervorrichtung 11 zur zweiten Bearbeitungsstation weiterbewegt. Wie erwähnt, wird in dieser Bearbeitungsstation die Leiterschleife gewickelt. Zur Durchführung des Wickelvorgangs wird das Halteteil 16 der Trägervorrichtung aus dem Sockelteil 17 mittels eines Greifers, der vorzugsweise in eine Verjüngung 37, wie sie in den Fig. 3 und 4 gezeigt ist, eingreift, herausgezogen. Anschließend wird das Halteteil um 90° gekippt, um mit dem dornenförmigen Ende 28 in die Wickelvorrichtung eingesetzt zu werden. Vorzugsweise besitzt die Wickelvorrichtung einen in Fig. 5 schematisch angedeuteten Rotor 38, der zwei Aufnahmebereiche 39 und 40 zur gleichzeitigen Aufnahme von zwei Halteteilen aufweist. Mittels einer 180°-Drehung des Rotors wird ein noch nicht gewickeltes Halteteil in eine Position gebracht, in der das Wickeln stattfindet, und gleichzeitig wird ein fertiggewickeltes Halteteil zurück in die Position gebracht, von der es durch den Greifer wieder entnommen und in das Sockelteil zurückgesetzt werden kann. Befindet sich ein Halteteil' nach der 180°-Drehung des Rotors in der für das Wickeln geeigneten Position, so wird der Dorn 28 des Halteteils mit einer Drehachse gekoppelt, die ein Rotieren des Halteteils für das Wickeln ermöglicht.

Bevor gewickelt wird, wird der Leiterschleifendraht herangeführt und mittels des oben geschilderten Verfahrens an einem der Befestigungszapfen 32a festgemacht. Auch das Wickeln und das erneute Befestigen des Drahtes an den Befestigungszapfen 32b erfolgt in der oben geschilderten Weise.

Vorzugsweise weist der Leiterschleifendraht eine Ummantelung auf, die unter Wärmeeinfluss mit angrenzenden Leiterschleifen verklebt. Hierdurch wird ein Verbund aus mehreren Leiterschleifen erreicht, der sich später leichter aus der Trägervorrichtung entnehmen lässt und besser für nachfolgende Bearbeitungsschritte geeignet ist. Um das Verkleben unter Wärmeeinwirkung zu erreichen, befindet sich an der Wickelvorrichtung vorzugsweise eine Heizeinrichtung, besonders bevorzugterweise eine Heizdüse. Das Heizen kann erst während der Rotation beginnen oder beginnt bereits kurze Zeit davor.

Nachdem das Halteteil gewickelt wurde, wird es durch den Rotor mittels einer 180°-Bewegung in die Position zurückgebracht, an der es durch den Greifer entnommen und in das Sockelteil zurückgesetzt werden kann. Im Anschluss wird die Trägervorrichtung zur Bearbeitungsstation 3 weitertransportiert. In der Bearbeitungsstation 3 erfolgt das Festschweißen der beiden Drahtenden an den beiden Kontaktflächen 23a und 23b des Chipmoduls. Wie anhand der Fig. 1 und 2 erläutert, verlaufen die beiden Drahtenden aufgrund ihrer Befestigung an den Befestigungszapfen 32a und 32b direkt über den Kontaktflächen. Somit kann in einfacher Weise durch Heranführen einer Schweißvorrichtung ein Verschweißen der Drahtenden mit den entsprechenden Kontaktflächen erfolgen. Für das Schweißen verbleibt das Halteteil vorzugsweise in dem Sockelteil, kann jedoch auch entnommen werden.

In der Bearbeitungsstation 4 werden die zwei Enden der Drahtschleife, die von Schweißpunkten wegstehen, abgeschnitten. Das Abschneiden kann durch Anheben der gesamten Trägervorrichtung oder nur des Halteteils in Richtung eines darüber liegenden Schneidwerkzeugs erfolgen. Die abgeschnittenen Drahtenden werden vorzugsweise mittels einer Gebläseeinrichtung entfernt. Hierzu können die Befestigungsstege 32a und 32b mittels von oben herangeführter Stifte abgesenkt werden.

In der nachfolgenden Bearbeitungsstation 5 kann die Leiterschleife mit angeschlossenem Chipmodul aus der Trägervorrichtung entnommen werden. Wie oben bereits angedeutet, erfolgt das Entnehmen durch Betätigen des Bolzens 25 der Fig. 4 in die zweite Position, d.h. in eine Position, bei der sich sowohl die Klemmvorrichtung 24 öffnet und somit das Modul freigegeben wird als auch der innere Teil 29 des Halteteils sich gegenüber dem äußeren Teil 30 absenkt. Anschließend nähert sich eine Greifeinrichtung von oben, die vorzugsweise etwa an den Stellen, an denen sich die Wickelstützen befinden, in die Leiterschleife eingreift. Der entsprechende Greifer besteht vorzugsweise aus zwei kurzen und zwei langen Stegen, die entsprechend entlang der kurzen und langen Seiten der Wicklungen angeordnet sind. Während des Greifens bewegen sich diese vier Stege aus dem Inneren der Leiterschleife zu der Leiterschleife hin und erfassen dabei mittels kleiner Haken die Leiterschleife. Damit die durch das Wickeln vorgespannte Leiterschleife nicht aus ihrer Wickelposition herausspringt, können die Haken mit Anschlagblechen abgedeckt sein, die die Leiterschleife während des Greifens nach unten drücken. Nachdem die Leiterschleife durch den Greifer erfasst wurde, wird sie angehoben und nach einer evtl. Drehung über eine Antenne geführt, so dass ein Funktionstest der fertigen Einheit aus Chipmodul und Leiterschleife erfolgen kann. Fehlerhafte Einheiten können dadurch aussortiert werden. Fehlerfreie Einheiten werden, im Falle dass die Chipkarten mittels Laminierverfahren hergestellt werden, auf eine Kernfolie der späteren Karte aufgesetzt. Zur Fixierung wird das Chipmodul vorher auf seiner Unterseite mit einem Kleber versehen und vorzugsweise wird die Leiterschleife mittels einer Heizeinrichtung erwärmt und unter Druck auf die entsprechende Folie aufgesetzt. Die Leiterschleife verklebt aufgrund der Wärme/Druckeinwirkung mit der Folie, das Modul aufgrund des Klebers.

Mittels der oben erläuterten bevorzugten Ausführungsform für das erfindungsgemäße Verfahren werden vorzugsweise eine Vielzahl derartiger Chipmodul-Leiterschleifen-Einheiten erzeugt und nebeneinander auf die erwähnte Folie gelegt. Derartig fertiggestellte Nutzen können dann weiteren Bearbeitungsschritten, vorzugsweise weiteren Laminierschritten, zugeführt werden.

Das erfindungsgemäße Verfahren eignet sich allgemein für die Herstellung von Einheiten aus Chips mit Leiterschleifen für Transponderanwendungen. Die Leiterschleifenform kann mit dem erwähnten Verfahren praktisch beliebig ausfallen und insbesondere in beliebiger Größe ausgeführt werden.

Insbesondere die angegebene Art der Erzeugung der Wicklungen, die Trägervorrichtung selbst sowie das Verfahren sowie die Vorrichtung zum Entfernen der Leiterschleife aus der Trägervorrichtung stellen eigenständige erfinderische Aspekte dar. Eine Kombination dieser einzelnen Elemente miteinander ist vorteilhaft, jedoch nicht zwingend. Ebenso ist die Art der Anordnung der einzelnen Bearbeitungsstationen in der in Fig. 5 gezeigten schematischen Weise vorteilhaft, jedoch können diese Bearbeitungsstationen auch entlang eines Kreises angeordnet sein oder einzeln verwendet werden.

Gemäß einem bevorzugten Aspekt der vorliegenden Erfindung ist insbesondere vorgesehen, dass die Leiterschleife auf die Folie geklebt wird.

Weiterhin können im Anschluss an das Kontaktieren der beiden Drahtenden überstehende Drahtenden mittels eines Schneidwerkzeugs entfernt werden. Anschließend können nach dem Abschneiden der freien Drahtenden diese durch eine Gebläsevorrichtung von der Trägervorrichtung entfernt werden. Dabei ist es möglich, dass während des Blasens Zapfen auf der Trägervorrichtung zum Befestigen des Drahtes während des Wickelns dienen, um ein Entweichen der abgeschnittenen Drahtenden zu ermöglichen.

In einer weiteren Ausführungsform kann in dem Verfahren die Wickelvorrichtung einen Rotor aufweisen, an dessen beiden Enden jeweils eine Trägervorrichtung eingesetzt werden kann und über eine 180°-Drehung des Rotors in die Position für das Wickeln gebracht wird.

Des Weiteren ist es möglich, die Leiterschleife, die sich momentan in der Position zum Wickeln befindet, mit einer Antriebsachse zur Erzeugung der Rotationsbewegung zu koppeln und auf der Seite, auf der der Leiterschleifendraht über die Wickelstützen verwickelt wird, mit einer Kappe zu verschließen.

Bei einem Verfahren eines weiteren Ausführungsbeispiels kann das Befestigen des Drahtes folgende Unterschritte umfassen:

Befestigen des Leiterschleifendrahtes an einem Punkt der Wickelvorrichtung, Weiterführen des Drahtes an einen ersten Punkt auf der Trägervorrichtung, relatives Auseinanderbewegen des Punktes auf der Wickelvorrichtung und des Punktes auf der Trägervorrichtung, um ein Abreißen des Drahtes zu erreichen, Verwickeln des Drahtes auf der Trägervorrichtung mittels Rotieren, Befestigen des Drahtes an einen zweiten Punkt auf der Trägervorrichtung, Weiterführen des Drahtes zur Wickel-Vorrichtung und Befestigen des Drahtes an der Wickelvorrichtung, wobei das Abreißen des Drahtes durch eine erneute Auseinanderbewegung der Trägervorrichtung und der Wickelvorrichtung erfolgt.

Weiterhin kann die Trägervorrichtung durch ein Förderband von einer Bearbeitungsstation zur nächsten weitertransportiert werden und nach Entnahme der Leiterschleife mit angeschlossenem Chip oder Chipmodul von der Trägervorrichtung zur ersten Bearbeitungsstation zurücktransportiert werden. Dabei kann die Trägervorrichtung zweiteilig ausgeführt sein, wobei ein Sockelteil stets auf dem Förderband verbleibt und ein Halteteil mit einer Klemmvorrichtung, für einzelne Bearbeitungsschritte, insbesondere während des Wickelns, von Greifern aus dem Sockelteil entnommen wird.

Zusätzlich kann die Trägervorrichtung eine Werkzeugkennung enthalten, anhand derer die Bearbeitungsstationen Trägervorrichtungen, die mit einem Chip oder Chipmodul bestückt sind, von Trägervorrichtungen, die unbestückt sind, unterschieden werden können.

Gemäß einer weiteren bevorzugten Ausführungsform kann die Arbeitsfläche des Halteteils der Vorrichtung einen inneren und einen äußeren Teil aufweisen, wobei der innere Teil gegenüber dem äußeren Teil absenkbar ist. Weiterhin kann das Halteteil der Vorrichtung in seinem Inneren ein Übertragungsglied aufweisen, das mit der Betätigungseinrichtung des Sockelteils gekoppelt ist und über die Betätigungseinrichtung das Absenken des inneren Teils der Arbeitsfläche ermöglicht.

Darüber hinaus kann der innere Teil der Arbeitsfläche in etwa die Abmessungen einer Normchipkarte aufweisen und die Wickelstützen entlang des Randes dieses absenkbaren inneren Bereichs anordnen, wobei die Wickelstützen hakenförmig ausgeführt und so dimensioniert sind, dass eine um sie gewickelte Leiterschleife die Arbeitsfläche berührt.

In einer weiteren vorteilhaften Ausführungsform besitzt die Klemmvorrichtung zwei Greifer, die ein eingesetztes Chipmodul von zwei Seiten umfassen und mittels Federkraft halten und die bei Betätigen der Betätigungseinrichtung des Sockelteils ihren gegenseitigen Abstand vergrößern, um das Chipmodul freizugeben.

Zusätzlich kann die Trägervorrichtung zwei versenkbare Befestigungszapfen aufweisen, an denen die beiden Enden der Leiterschleife während des Wickelvorgangs befestigbar sind, wobei die Befestigungszapfen jeweils eine scharfe Kante aufweisen, um ein Abreißen des Leiterschleifendrahtes unter Zugeinwirkung zu erreichen.

Ein Verfahren zum Entnehmen der Leiterschleife aus einer Trägervorrichtung, wie sie z.B. oben beschrieben wurde, kann folgende Schritte umfassen:
erstes Betätigen der Betätigungseinrichtung des Sockelteils, um ein Lösen des Chipmoduls aus der Klemmeinrichtung zu erreichen, zweites Betätigen der Betätigungseinrichtung des Sockelteils, um ein Absenken des inneren Bereichs der Arbeitsfläche mit aufgewickelter Leiterschleife zu erreichen, und Entnehmen der Leiterschleife mittels einer Greifvorrichtung von der Trägervorrichtung und Plazieren der Funktionseinheit aus Leiterschleife und Chipmodul auf einer Folie. Des weiteren kann die entnommene Funktionseinheit aus Chipmodul und Leiterschleife einer Antenne zugeführt werden zur Durchführung eines Funktionstests.

In einer weiteren erfindungsgemäßen Ausführungsform kann in dem Verfahren das Chipmodul vor dem Auflegen auf die Folie auf seiner Unterseite mit einem Kleber versehen werden, wobei die Leiterschleife vor dem Auflegen auf die Folie erwärmt wird und unter Druck auf die Folie aufgelegt wird.

## Patentansprüche

1. Verfahren zum Herstellen einer Leitschleife (19) mit angeschlossenem Chip (21) oder Chipmodul (20) zur Verwendung in Transpondern, vorzugsweise kontaktlosen Chipkarten mit folgenden Schritten:
A) Zuführen eines Chips (21) oder Chipmoduls (20),
B) Einsetzen des Chips oder Chipmoduls in eine bewegliche Trägervorrichtung (16,17,18), wobei die Trägervorrichtung eine Klemmvorrichtung (24) aufweist, durch die das Chipmodul (20) auf der Trägervorrichtung fixiert wird,
C) relatives Bewegen der Trägervorrichtung (16,17,18) zu einer Leiterschleifenwickelvorrichtung,
D) Einsetzen zumindest eines Teils der Trägervorrichtung (18), enthaltend die Klemmvorrichtung (24) in die Wickelvorrichtung,
E) Zuführen eines Leiterschleifendrahtes und Befestigen (32a) des Drahtes an dem in die Wickelvorrichtung eingesetzten Teil der Trägervorrichtung (18),
F) Rotieren der eingesetzten Trägervorrichtung (18) zum Erstellen einer aus mehreren Wicklungen bestehenden Leiterschleife, wobei die Leiterschleife in ihrer Form durch
auf der Trägervorrichtung vorhandene Wickelstützen (31) bestimmt wird und dabei die Form erhält, die zum Einbringen in einen Transponderkörper bzw. Chipkartenkörper geeignet ist,
G) Befestigen eines losen Endes des Wickeldrahtes an einer weiteren Stelle (32b) auf der Trägervorrichtung,
H) Abschneiden des auf der Trägervorrichtung verwickelten Drahtes von dem verbleibenden Leiterschleifendraht,
I) relatives Bewegen der Trägervorrichtung zu einer Kontaktiervorrichtung,
J) Kontaktieren der beiden Drahtenden an entsprechende Kontaktflächen (23a, 23b) auf dem Chip oder Chipmodul,
K) Entnehmen der mit dem Chip (21) oder Chipmodul (22) verbundenen Leiterschleife (19) aus der Trägervorrichtung unter gleichzeitigem Lösen des Chips oder Chipmoduls aus der Klemmvorrichtung,
L) Aufbringen einer Klebeschicht auf den Chip (21) oder das Chipmodul (20) und Auflegen der Leiterschleife mit angeschlossenem Chip oder Chipmodul auf eine Folie, wobei die Leiterschleife vor dem Auflegen auf die Folie erwärmt wird und beim Auflegen ganz oder teilflächig in die Folie gedrückt wird.

2. Verfahren nach Anspruch 1, **dadurch gekennzeichnet, dass** die Leiterschleife in n-eckiger Form, vorzugsweise rechteckförmig, gewickelt wird, um entlang oder in der Nähe der Ränder einer Chipkarte zu verlaufen.

3. Verfahren nach Anspruch 1 oder 2, **dadurch gekennzeichnet, dass** der Leiterschleifendraht eine isolierende Ummantelung aufweist, die unter Einfluss von Wärme mit Isolierschichten angrenzender Wicklungen verklebt.

4. Verfahren nach Anspruch 3, **dadurch gekennzeichnet, dass** während oder vor dem Schritt F) eine Erwärmung des Leiterschleifendrahtes erfolgt, vorzugsweise mittels einer Heizdüse.

5. Verfahren nach einem der vorhergehenden Ansprüche, **dadurch gekennzeichnet, dass** im Anschluss an den Schritt K) ein Funktionstest der elektrischen Einheit, bestehend aus Leiterschleife und Chip oder Chipmodul erfolgt.

6. Verfahren nach Anspruch 5, **dadurch gekennzeichnet, dass** zur Durchführung des Testes die Leiterschleife mit Chip oder Chipmodul über ein Antennenfeld geführt wird.

## Claims

1. A method for manufacturing a conducting loop (19) with an attached chip (21) or chip module (20) for use in transponders, preferably contactless chip cards, with the following steps:
A) supplying a chip (21) or a chip module (20),
B) inserting the chip or chip module into a movable support device (16, 17, 18), whereby the support device has a clamping device (24), by means of which the chip module (20) is fixed onto the support device,
C) moving the support device (16, 17, 18) relatively to a conducting loop winding device,
D) inserting at least a part of the support device (18), containing the clamping device (24), into the winding device,
E) supplying a conducting loop wire and securing (32a) the wire at the part of the support device (18) which is inserted into the winding device,
F) rotating the inserted support device (18) in order to create a conducting loop consisting of several windings, whereby the conducting loop, in its form, is defined by
winding rests (31) provided on the support device and thereby assumes the form which is suitable for being introduced into a transponder body or chip card body,
G) securing a loose end of the winding wire to a further location (32b) on the support device,
H) cutting away the wire, which is wound onto the support device, from the remaining conducting loop wire,
I) moving the support device relatively to a contacting device,
J) contacting the two wire ends at corresponding contact surfaces (23a, 23b) on the chip or chip module,
K) removing the conducting loop (19), which is connected to the chip (21) or chip module (22), from the support device whilst, at the same time, releasing the chip or chip module from the clamping device,
L) applying a glue layer to the chip (21) or the chip module (20) and placing the conducting loop with the attached chip or chip module onto a sheet, whereby the conducting loop is heated before being placed onto the sheet, and when placing on takes place, is pressed in its entirety or over part of its surface into the film.

2. The method according to Claim 1, **characterised in that** the conducting loop is wound in an n-cornered form, preferably a rectangular form, in order to run along or near the edges of a chip card.

3. The method according to Claim 1 or 2, **characterised in that** the conducting loop wire has an insulating casing which bonds with windings bordering on insulating layers under the influence of heat.

4. The method according to Claim 3, **characterised in that**, during or before Step F), heating of the conducting loop wire is effected, preferably by means of a heat jet.

5. The method according to one of the preceding claims, **characterised in that**, following Step K, an operating test on the electric unit is effected, said electric unit consisting of the conducting loop and the chip or chip module.

6. The method according to Claim 5, **characterised in that**, in order to perform the test, the conducting loop with the chip or chip module is guided via an antenna field.

## Revendications

1. Procédé pour la fabrication d'une boucle conductrice (19) connectée à une puce (21) ou un module à puce (20), pour une utilisation dans les transpondeurs, de préférence avec des cartes à puce sans contact, d'après les étapes suivantes .
A) Amenée d'une puce (21) ou d'un module à puce (20),
B) Mise en place de la puce ou du module à puce dans un dispositif de support (16, 17, 18) mobile comprenant un dispositif de serrage (24) permettant de fixer le module à puce (20) sur le dispositif de support,
C) Déplacement relatif du dispositif de support (16, 17, 18) vers un dispositif d'enroulement de la boucle conductrice,
D) Mise en place d'au moins une partie du dispositif de support (18), tout en introduisant le dispositif de serrage (24) dans le dispositif d'enroulement,
E) Amenée d'un fil de la boucle conductrice et fixation (32a) du fil sur la partie du dispositif de support (18) mise en place dans le dispositif d'enroulement,
F) Rotation du dispositif de support (18) mis en place pour la réalisation d'une boucle conductrice composée de plusieurs enroulements, la forme de la boucle conductrice étant déterminée par des supports d'enroulement (31) placés au niveau du dispositif de support, afin de donner à la boucle conductrice une forme appropriée pour l'insertion dans un corps de transpondeur ou corps de carte,
G) Fixation d'une extrémité libre du fil d'enroulement sur un autre point (32b) du dispositif de support,
H) Séparation par découpe du fil enroulé autour du dispositif de support du fil de boucle conductrice restant,
I) Déplacement relatif du dispositif de support vers un dispositif de mise en contact,
J) Mise en contact des deux extrémités du fil avec des surfaces de contact correspondantes (23a, 23b) de la puce ou du module à puce,
K) Retrait de la boucle conductrice (19) connectée à la puce (21) ou au module à puce (22), tout en libérant en même temps la puce ou le module à puce du dispositif de serrage,
L) Application d'une couche d'adhésif sur la puce (21) ou le module à puce (20) et application de la boucle conductrice connectée à la puce ou au module à puce sur un film, la boucle conductrice étant chauffée préalablement à son application, et pressée intégralement ou partiellement dans le film.

2. Procédé selon la revendication 1, **caractérisé en ce que** la boucle conductrice est enroulée, en forme de polygone à n sommets ou préférablement de rectangle, afin de s'étendre le long ou près des bords de la carte à puce.

3. Procédé selon la revendication 1 ou 2,
**caractérisé en ce que** le fil de la boucle conductrice comporte une gaine isolante, qui colle aux couches isolantes des boucles adjacentes sous l'influence de la chaleur.

4. Procédé selon la revendication 3, **caractérisé en ce que** le fil de la boucle conductrice est chauffé, pendant ou avant l'étape F), de préférence au moyen d'une buse de chauffe.

5. Procédé selon l'une des revendications précédentes, **caractérisé en ce qu'**un test de fonctionnement de l'unité électrique, composée de la boucle conductrice et de la puce ou du module à puce, est réalisé suite à l'étape K).

6. Procédé selon la revendication 5, **caractérisé en ce que** la boucle conductrice connectée à la puce ou au module à puce est passée par un champ d'antenne pour l'exécution du test.
